(19) Europäisches Patentamt
European Patent Office
Office européen des brevets

(11) **EP 4 339 565 B1**

(12) **EUROPEAN PATENT SPECIFICATION**

(45) Date of publication and mention
of the grant of the patent:
**10.06.2026 Bulletin 2026/24**

(21) Application number: **23194426.5**

(22) Date of filing: **31.08.2023**

(51) International Patent Classification (IPC):
*G01H 1/00* (2006.01)   *G01R 31/34* (2020.01)
*H02K 11/20* (2016.01)   *F03G 7/08* (2006.01)
*H02N 2/18* (2006.01)

(52) Cooperative Patent Classification (CPC):
**G01H 1/003;** H02N 2/186

(54) **MOTOR MONITORING SENSOR**

MOTORÜBERWACHUNGSSENSOR

CAPTEUR DE SURVEILLANCE DE MOTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.09.2022 JP 2022145911**

(43) Date of publication of application:
**20.03.2024 Bulletin 2024/12**

(73) Proprietor: **OMRON Corporation
Kyoto 600-8530 (JP)**

(72) Inventors:
• **OHTA, Takashi
Kyoto-shi, Kyoto, 600-8530 (JP)**
• **HATSUDA, Takenori
Kyoto-shi, Kyoto, 600-8530 (JP)**
• **YAMASHITA, Eisuke
Kyoto-shi, Kyoto, 600-8530 (JP)**
• **KAWAMOTO, Shingo
Kyoto-shi, Kyoto, 600-8530 (JP)**
• **OKAMOTO, Akira
Kyoto-shi, Kyoto, 600-8530 (JP)**

(74) Representative: **Isarpatent
Patent- und Rechtsanwälte
Barth Hassa Peckmann & Partner mbB
Friedrichstraße 31
80801 München (DE)**

(56) References cited:
US-A1- 2010 076 714   US-A1- 2012 041 695
US-A1- 2017 151 964   US-A1- 2019 136 861
US-A1- 2020 287 479   US-A1- 2021 123 835

**Description**

FIELD

The present invention relates to a motor monitoring sensor.

BACKGROUND

Sensors are used to monitor motors that drive devices. For example, Non-Patent Literature 1 describes a battery-powered sensor. For example, Non-Patent Literature 2 describes a sensor that operates with power received from an external power supply.

CITATION LIST

NON-PATENT LITERATURE

Non-Patent Literature 1: WISE-2410 LoRaWAN Wireless Condition Monitoring Sensor [Online]. Advantec Co., Ltd., [retrieved on 2022-08-07]. Retrieved from the Internet: < URL: https://www.advantech.co.jp/products/78b36b30-8dc1-44b3-91a3-01337cc09b11/wise-2410/mod_25018dc7-355c-40b4-bf9b-c93f6c73f1a0>
Non-Patent Literature 2: iQ Monozukuri Rotating Machine Vibration Diagnosis Introduction of Operation Check Equipment [Online]. Mitsubishi Electric Corporation, February 2019 [retrieved on 2022-08-07], Retrieved from the Internet: < URL: https://www.mitsubishielectric.co.jp/fa/document/technews/sol/iqmonozukuri/bcn-e2113-0033/bcne21130033f.pdf >

Patent Literature 1: US 2010/076714 A1
Patent Literature 2: US 2012/041695 A1
Patent Literature 3: US 2021/123835 A1

In Patent Literature 1 and 3, motor monitoring sensors are disclosed, comprising an acceleration sensor, a processor, a transmitter and a vibration-powered generator which supplies power to the acceleration sensor, processor and transmitter. In Patent Literature 3, if there is not enough energy for data collection or if the motor is off, the device returns to a low-power state and sends a message.

SUMMARY

TECHNICAL PROBLEM

When, for example, a motor has a failure and stops suddenly during operation, a belt attached to the rotational shaft of the motor may be entangled or a secondary device may rotate without contacting the motor. This may possibly cause failures in other devices connected to the motor. The state of the motor is thus to be continuously monitored with a sensor. However, continuous monitoring of a motor with a battery-powered sensor causes battery replacement with an additional cost. Monitoring of a motor with a sensor that receives power from an external power supply causes electrical work for installing the sensor. In other words, monitoring of a motor either with a battery-powered sensor or a sensor that receives power from an external power supply increases the operating cost of the motor.
A technique according to an aspect of the disclosure is directed to a motor monitoring sensor that is continuously operable at a lower cost.

SOLUTION TO PROBLEM

The present invention is set out by the appended claims. The motor monitoring sensor according to the present invention, as defined by independent claim 1, includes an acceleration sensor attachable to a motor to be monitored to detect vibration of the motor, a processor that generates state information indicating a state of the motor based on a detection value indicating the vibration of the motor detected by the acceleration sensor, a transmitter that transmits the generated state information to a host device, and a vibration-powered generator attachable to the motor to generate power with the vibration of the motor and supply the generated power to the acceleration sensor, the processor, and the transmitter.

The motor monitoring sensor includes the vibration-powered generator that generates power with the vibration of the motor to be monitored. In the motor monitoring sensor, the processor, the acceleration sensor, and the communicator are driven by power supplied from the vibration-powered generator. The motor monitoring sensor is thus drivable without a battery. The motor monitoring sensor with this structure reduces the operating cost associated with battery replacement and is thus continuously operable at a lower cost.

The motor monitoring sensor may also have the features described below. The vibration-powered generator includes a vibration power generation element that generates power with the vibration of the motor and a power storage that stores the power generated by the vibration power generation element. The motor monitoring sensor may supply the power stored in the power storage to the processor and the transmitter. Power generated by the vibration power generation element is dependent on the vibration of the motor, and thus may not be supplied stably to drive the processor, the acceleration sensor, and the communicator. The power storage stores excess power generated by the vibration power generation element. The power stored in the power storage is used to supplement any insufficiency of power generated by the vibration power generation element. This allows the motor monitoring sensor to be driven more stably.

The motor monitoring sensor may further include a battery. The motor monitoring sensor may supply power from the battery to the processor and the transmitter in response to the power generated by the vibration-powered generator being insufficient to drive the processor and the transmitter. As described above, power generated by the vibration-powered generator is dependent on the vibration of the motor, and thus may not be supplied stably. The motor monitoring sensor further including the battery also uses power supplied from the battery to supplement any insufficiency of power supplied from the vibration-powered generator, and can thus monitor the motor more stably.

According to the present invention, the processor adds, to the state information, information indicating that the motor is stopped in response to the power supplied from the vibration-powered generator being less than or equal to a predetermined threshold. The vibration-powered generator generates power with the vibration of the motor, and can thus detect the motor being stopped in response to the amount of power generated by the vibration-powered generator being less than or equal to the predetermined threshold. The motor monitoring sensor with these features can provide, to the host device, a notification of the motor being stopped when, for example, the acceleration sensor has a failure or power is insufficient to drive the acceleration sensor.

According to the present invention, the motor monitoring sensor further includes a storage that stores a time slot in which the motor is stopped. The processor adds information indicating a failure of the motor to the state information in response to the motor detected as being stopped at a time different from the time slot. The motor may not be constantly driven and may be stopped as planned. The storage prestores the time slots in which the motor is stopped. The motor monitoring sensor reduces notifications of the motor being stopped when the motor is detected as being stopped within these time slots.

The state information may be generated based on time-series data about the detection value detected by the acceleration sensor. The processor may determine a failure value indicating a degree of failure of the motor based on the detection value and add the failure value to the state information. The failure value may include three or more levels of index values each corresponding to the degree of failure of the motor, or may include an index value indicating normality of the motor or an index value indicating abnormality of the motor.

ADVANTAGEOUS EFFECTS

The motor monitoring sensor according to the above aspects of the disclosure is continuously operable at a lower cost.

BRIEF DESCRIPTION OF THE DRAWINGS

FIG. 1 is a block diagram of a motor monitoring sensor according to an embodiment.
FIG. 2 is a diagram of the motor monitoring sensor according to the embodiment, showing an example use of the motor monitoring sensor.
FIG. 3 is a diagram showing an example correspondence between the root-mean-square (RMS) value of the vibration velocity of a motor and the state of the motor.
FIG. 4 is a first flowchart of an example process performed by the motor monitoring sensor.
FIG. 5 is a second flowchart of the example process performed by the motor monitoring sensor.

DETAILED DESCRIPTION

Example Use

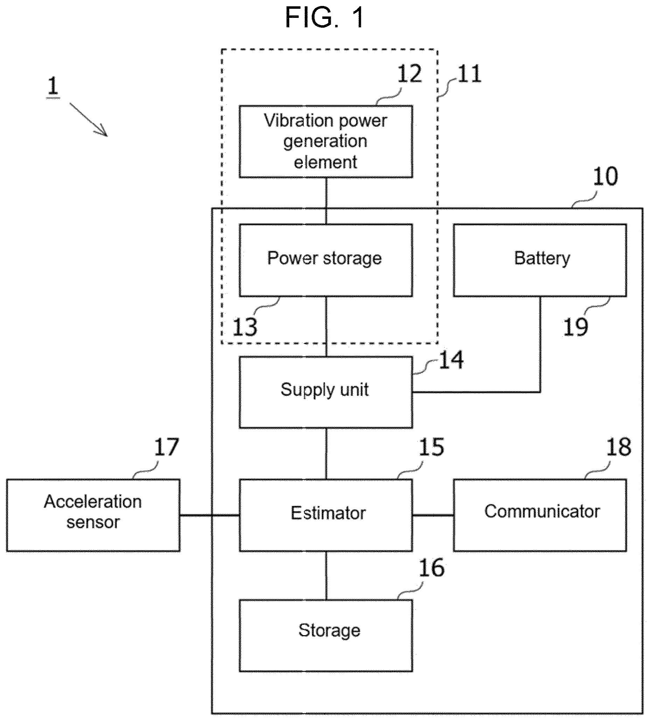

An example use of the present invention will now be described with reference to the drawings. The present invention is applicable to, for example, an example motor monitoring sensor 1 shown in FIG. 1. The motor monitoring sensor 1 includes a housing 10, a vibration-powered generator 11, a supply unit 14, an estimator 15, a storage 16, an acceleration sensor 17, a communicator 18, and a battery 19. The vibration-powered generator 11 includes a vibration power generation element 12 and a storage battery 13. The vibration power generation element 12 and the acceleration sensor 17 are located outside the housing 10. The storage battery 13, the supply unit 14, the estimator 15, the storage 16, the communicator 18, and the battery 19 are accommodated in the housing 10.

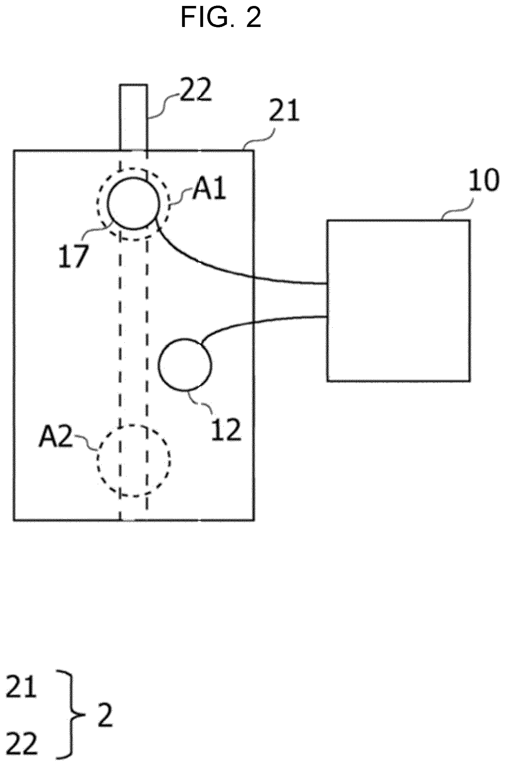

The motor monitoring sensor 1 is used with, for example, the acceleration sensor 17 and the vibration power generation element 12 placed on a motor body 21 as shown in FIG. 2. The vibration power generation element 12 generates power with the vibration of a motor 2 being driven. The power generated by the vibration power generation element 12 is supplied to, for example, the estimator 15, the acceleration sensor 17, and the communicator 18. The acceleration sensor 17 detects the vibration of the motor 2. The estimator 15 uses a detection value indicating the vibration of the motor 2 detected by the acceleration sensor 17 to generate state information indicating the state of the motor 2. The communicator 18 transmits the state information generated by the estimator 15 to a host device.

In the motor monitoring sensor 1 with this structure, the vibration power generation element 12 uses the vibration of the motor 2 to generate power to drive the estimator 15, the acceleration sensor 17, and the communicator 18. The motor monitoring sensor 1 is drivable without using any battery or external power supply, eliminating the work-hours for battery replacement or electrical work. The motor monitoring sensor 1 can continuously monitor the motor 2 at a lower cost.

Embodiments

The motor monitoring sensor 1 will now be further described with reference to the drawings. FIG. 1 is a block diagram of a motor monitoring sensor 1 according to an embodiment. FIG. 2 is a diagram of the motor monitoring sensor 1 according to the embodiment, showing an example use of the motor monitoring sensor 1. In FIG. 2, the position of a motor shaft 22 in the motor body 21 is indicated by dotted lines. The motor monitoring sensor 1 detects the vibration of the motor 2 and diagnoses the state of the motor 2 based on the detected vibration.

The motor 2 monitored by the motor monitoring sensor 1 is, for example, an electric motor that drives various devices in a building. The motor 2 is used in, for example, an in-house power generation system and a power receiving and transforming facility. The motor 2 is used in, for example, a hot and cold water generator, an absorption refrigerator, and a centrifugal chiller. The motor 2 is used to power, for example, a water or sewage pump, an elevator, an automatic door, and a shutter. The motor 2 may also be used in, for example, an air conditioner and a lighting apparatus.

The vibration-powered generator 11 includes the vibration power generation element 12 that generates power with vibration and the storage battery 13 that stores the power generated by the vibration power generation element 12. Examples of the storage battery 13 include a capacitor and a secondary battery. The battery 19 is, for example, a primary battery. Examples of the battery 19 include a button battery and a dry cell.

The supply unit 14 supplies power supplied from the vibration-powered generator 11 and the battery 19 to the estimator 15, the acceleration sensor 17, and the communicator 18. For example, when power supplied from the vibration-powered generator 11 is sufficient for consumption by the estimator 15, the acceleration sensor 17, and the communicator 18, the supply unit 14 supplies the power from the vibration-powered generator 11 to the estimator 15, the acceleration sensor 17, and the communicator 18, and reduces (or prohibits) power supply from the battery 19. For example, when power supplied from the vibration-powered generator 11 is insufficient for consumption by the estimator 15, the acceleration sensor 17, and the communicator 18, the supply unit 14 also supplies, in addition to the power from the vibration-powered generator 11, power supplied from the battery 19 to the estimator 15, the acceleration sensor 17, and the communicator 18.

The acceleration sensor 17 detects acceleration. The acceleration sensor 17 may be a two-axis sensor or a three-axis sensor. The acceleration sensor 17 is attached to the motor 2 and detects the vibration of the motor 2. The acceleration sensor 17 outputs, to the estimator 15, a detection value indicating the detected vibration of the motor 2. The acceleration sensor 17 may be placed above the motor shaft 22 of the motor 2. The acceleration sensor 17 may be placed in, for example, an area A1 or A2 in FIG. 2.

The estimator 15 is, for example, a processor. The estimator 15 executes a predetermined program stored in the storage 16 to perform intended processing. The storage 16 is, for example, an erasable programmable read-only memory (EPROM), a solid-state drive (SSD), or a hard disk drive (HDD).

The estimator 15 stores the detection value received from the acceleration sensor 17 into the storage 16 together with the time at which the detection value is received from the acceleration sensor 17. The estimator 15 generates state information indicating the state of the motor 2 based on the time-series detection values stored in the storage 16. The state information includes, for example, the effective value (root-mean-square, or RMS, value) of the vibration velocity of the motor 2.

The estimator 15 determines the RMS value of the vibration velocity of the motor 2 using, for example, Formula 1 or Formula 2 below.

[Math 1]

$$v_{rms} = \sqrt{\frac{1}{T} \int_0^T v^2(t)\,dt} \quad \cdots (1)$$

$$v_{rms} = \frac{10^3}{\pi} \sqrt{\left(\frac{a_1}{f_1}\right)^2 + \left(\frac{a_2}{f_2}\right)^2 + \left(\frac{a_3}{f_3}\right)^2 \cdots + \left(\frac{a_n}{f_n}\right)^2} \quad \cdots (2)$$

In Formula 1, $v(t)$ is the vibration velocity as a function of time, and $T$ is the sampling time. The sampling time is longer than the cycle of a main vibration component of the vibration velocity $v(t)$. In Formula 2, the values $a_1$, $a_2$, $a_3$, ..., and $a_n$ are the RMS values of the vibration acceleration. The values $f_1$, $f_2$, $f_3$, ..., and $f_n$ are the RMS values of the vibration frequency. In Formulas 1 and 2, $v_{rms}$ is the RMS value of the vibration velocity.

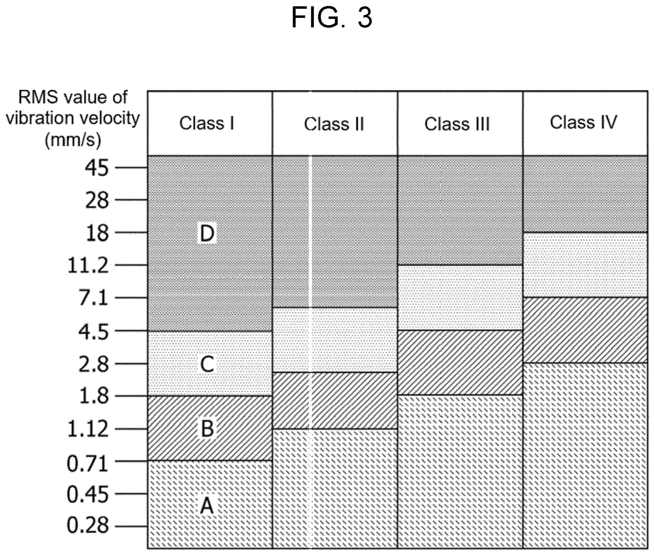

The state of the motor 2 can be indicated with, for example, the RMS value $v_{rms}$ of the vibration velocity. FIG. 3 is a diagram showing an example correspondence between the RMS value of the vibration velocity of the motor 2 and the state of the motor 2. FIG. 3 shows the value $v_{rms}$ and the state of the motor 2 in class I, class II, class III, or class IV. The motor 2 in the class I is an electric motor with a power of less than or equal to 15 kW. The motor 2 in the class II is an electric motor with a power of less than or equal to 75 kW. An electric motor in the class III is a large electric motor installed on a rigid foundation. An electric motor in the class IV is a large electric motor installed on a soft foundation.

In FIG. 3, the state of the motor 2 is classified into one of four levels of A, B, C, and D based on the value $v_{rms}$. For example, the level A indicates that the motor 2 is newly installed, the level B indicates that the motor 2 is operable over a long period, the level C indicates that the motor 2 is not expected to be operable over a long period, and the level D indicates that the motor 2 is in a severe condition with a possibility to break. In this manner, the state of the motor 2 can be determined based on the value $V_{rms}$.

The communicator 18 is a communication module that transmits the state information generated by the estimator 15 to the host device. The communicator 18 communicates with the host device using, for example, Wi-Fi (registered trademark), Bluetooth (registered trademark), or LoRa (registered trademark).

Process

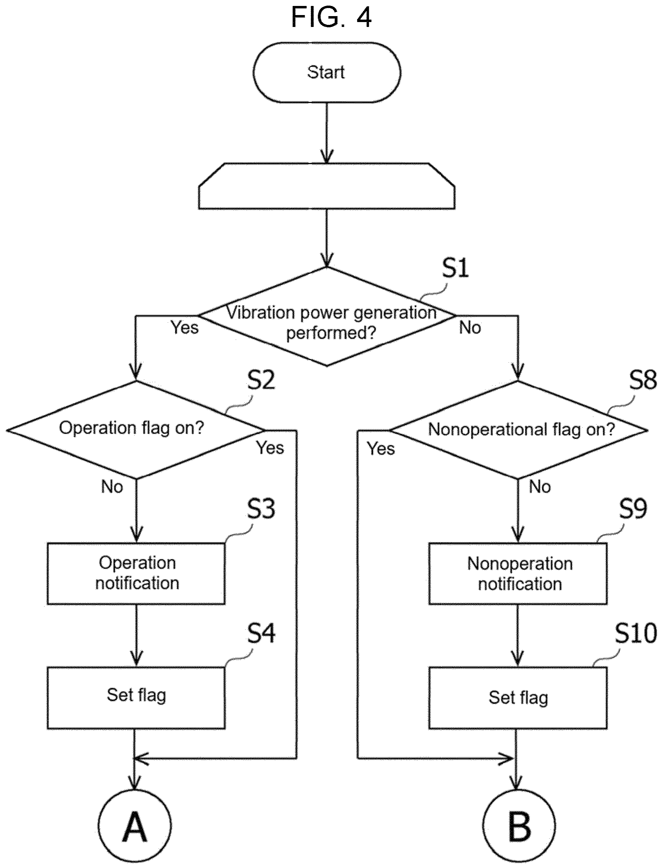

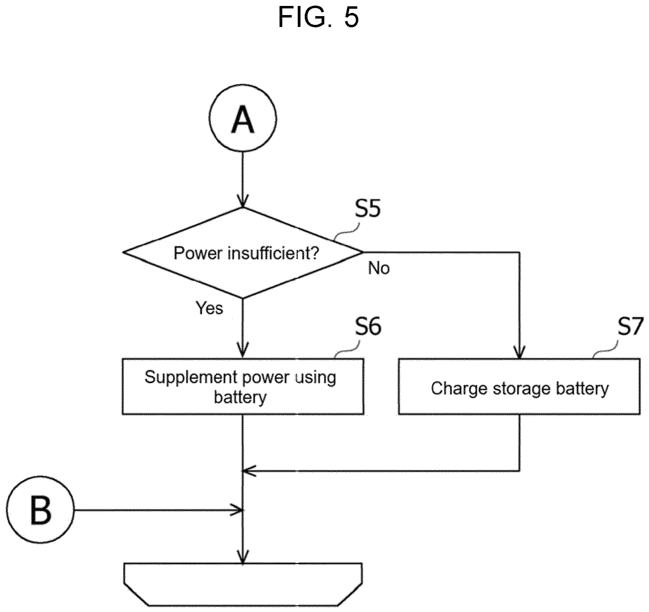

FIGs. 4 and 5 are flowcharts of an example process performed by the motor monitoring sensor 1. In FIG. 4, A indicates a continuation to A in FIG. 5, and B indicates a continuation to B in FIG. 5. The processing shown in FIGs. 4 and 5 is performed repeatedly once vibration power generation is started by the vibration power generation element 12. The example process performed by the motor monitoring sensor 1 will now be described with reference to FIGs. 4 and 5.

In step S1, the estimator 15 determines whether vibration power generation is performed by the vibration power generation element 12. For example, when power generated through the vibration power generation performed by the vibration power generation element 12 is less than or equal to a predetermined threshold, the estimator 15 determines that no vibration power generation is performed. When the vibration power generation is performed, the estimator 15 stores a detection value detected by the acceleration sensor 17 into the storage 16 together with the time of detection. When the vibration power generation is performed (Yes in step S1), the processing advances to step S2. When no vibration power generation is performed (No in step S1), the processing advances to step S8.

In step S2, the estimator 15 determines whether an operation flag is on. In response to the motor 2 determined to be in operation, the estimator 15 sets the operation flag to on. When the operation flag is on (Yes in step S2), the processing advances to step S5. When the operation flag is off (No in step S2), the processing advances to step S3.

In step S3, the estimator 15 causes the communicator 18 to transmit state information indicating that the motor 2 is in operation. For example, the estimator 15 may add, to the state information, the value $v_{rms}$ calculated using the above Formula 1 or Formula 2 based on time-series information about the detection values stored in the storage 16 and cause the communicator 18 to transmit the state information.

In step S4, the estimator 15 sets the operation flag to on. The estimator 15 also sets a nonoperational flag to off. The nonoperational flag indicates that the motor 2 is nonoperational. The set flags are stored into, for example, the storage 16.

In step S5, the supply unit 14 determines whether power supplied from the vibration power generation element 12 is insufficient to drive the estimator 15, the acceleration sensor 17, and the communicator 18. When the power is insufficient (Yes in step S5), the processing advances to step S6. When the power is sufficient (No in step S5), the processing advances to step S7.

In step S6, the supply unit 14 also supplies power from the battery 19 to the estimator 15, the acceleration sensor 17, and the communicator 18. In step S7, the supply unit 14 charges the storage battery 13 with excess power supplied from the vibration-powered generator 11. When the processing in step S6 or S7 is complete, the processing advances to step S1.

In step S8, the estimator 15 determines whether the nonoperational flag is on. When the nonoperational flag is on (Yes in step S8), the processing advances to step S1. When the nonoperational flag is off (No in step S8), the processing advances to step S9.

In step S9, the estimator 15 causes the communicator 18 to transmit state information indicating that the motor 2 is nonoperational (stopped). For example, the estimator 15 may add, to the state information, the value $v_{rms}$ calculated using the above Formula 1 or Formula 2 based on the acceleration obtained from the acceleration sensor 17 and cause the communicator 18 to transmit the state information.

In step S10, the estimator 15 sets the nonoperational flag to on. The estimator 15 also sets the operation flag to off. The set flags are stored into, for example, the storage 16.

Effects of Embodiment

In the embodiment, the motor monitoring sensor 1 includes the vibration-powered generator 11 that generates power with the vibration of the motor 2. In the motor monitoring sensor 1, the estimator 15, the acceleration sensor 17, and the communicator 18 are driven by power supplied from the vibration-powered generator 11. The motor monitoring sensor 1 thus allows the estimator 15, the acceleration sensor 17, and the communicator 18 to be driven without the battery 19. This reduces the frequency of replacement of the battery 19 in the motor monitoring sensor 1, and thus allows the motor monitoring sensor 1 to be used continuously for monitoring the motor 2 at a lower cost.

The motor monitoring sensor 1 including the estimator 15 consumes more power. For a motor monitoring sensor that does not include the vibration-powered generator 11 and is driven by power supplied from a battery, the battery is to be replaced frequently. In the present embodiment, the motor monitoring sensor 1 is driven by power supplied from the vibration-powered generator 11 that generates power with the vibration of the motor 2, thus reducing the frequency of battery replacement. With power supplied from the vibration-powered generator 11 sufficient to drive the motor monitoring sensor 1, the motor monitoring sensor 1 may eliminate the battery 19.

The motor monitoring sensor 1 includes the storage battery 13 that stores power generated by the vibration power generation element 12. Power generated by the vibration power generation element 12 is dependent on the vibration of the motor 2, and thus may not be supplied stably to drive the estimator 15, the acceleration sensor 17, and the communicator 18. The storage battery 13 stores excess power generated by the vibration power generation element 12. The power stored in the storage battery 13 is used to supplement any insufficiency of power generated by the vibration power generation element 12. This allows the motor monitoring sensor 1 to be driven more stably.

In the embodiment, the motor monitoring sensor 1 also includes the battery 19 in addition to the vibration-powered generator 11. As described above, power generated by the vibration power generation element 12 is dependent on the vibration of the motor 2 and thus may not be supplied stably. In the present embodiment, the motor monitoring sensor 1 including the battery 19 can use power supplied from the battery 19 to supplement any insufficiency of power supplied from the vibration-powered generator 11. This allows the motor monitoring sensor 1 to be driven more stably.

In the embodiment, the motor monitoring sensor 1 causes the communicator 18 to provide a notification of the motor 2 being nonoperational in response to the power generated by the vibration power generation element 12 being less than or equal to the predetermined threshold. When power generated by the vibration power generation element 12 is less than or equal to the predetermined threshold, the estimator 15 causes the communicator 18 to transmit the state information indicating that the motor 2 is nonoperational. The structure according to the present embodiment can provide a notification of the motor 2 being nonoperational when the acceleration sensor 17 has a failure or when power generated by the vibration power generation element 12 is insufficient to drive the acceleration sensor 17.

In the embodiment, the estimator 15 calculates the value $v_{rms}$, which indicates the state of the motor 2, using the above Formula 1 or Formula 2 based on time-series data about the detection values from the acceleration sensor 17 stored in the storage 16. The estimator 15 then adds the calculated $v_{rms}$ to the state information and transmits the state information to the host device. As described with reference to FIG. 3, the value $v_{rms}$ indicates the state of the motor 2. In other words, the motor monitoring sensor 1 according to the embodiment can provide, to the host device, information indicating that the motor 2 is operable over a long period or that the motor 2 is to be replaced.

Instead of notifying the value $v_{rms}$, the estimator 15 may notify the host device of an index value indicating the state of the motor 2 indicated by the value $v_{rms}$. The index value indicating the state of the motor 2 may be one of four levels of index values, which are, for example, an index value indicating that the motor 2 is newly installed, an index value indicating that the motor 2 is operable over a long period, an index value indicating that the motor 2 is not expected to be operable over a long period, and an index value indicating that the motor 2 is in a severe condition with a possibility to break, as described with reference to FIG. 3. The index value indicating that the motor 2 is newly installed, the index value indicating that the motor 2 is operable over a long period, the index value indicating that the motor 2 is not expected to be operable over a long period, and the index value indicating that the motor 2 is in a severe condition with a possibility to break are examples of three or more levels of index values.

The state of the motor 2 may be indicated using one of two levels of index values, which are, for example, an index value indicating that the motor 2 is continuously operable and an index value indicating that the motor 2 is recommended to be replaced. The state of the motor 2 being continuously operable may be either the state of the motor 2 being newly established or the state of the motor 2 being operable over a long period described with reference to FIG. 3. The state of the motor 2 recommended to be replaced may be either the state of the motor 2 not expected to be operable over a long period or the state of the motor 2 being in a severe condition with a possibility to break described with reference to FIG. 3. The index value indicating that the motor 2 is continuously operable is an example index value indicating normality. The index value indicating that the motor 2 is recommended to be replaced is an example index value indicating abnormality.

In the invention, the estimator 15 provides a notification of the motor 2 being nonoperational when no vibration power generation is performed by the vibration power generation element 12. However, the motor 2 may not be constantly driven. For example, the motor 2 may be stopped as planned for specific periods. The storage 16 prestores information indicating time slots in which the motor 2 is stopped. The estimator 15 stops providing a notification of the motor 2 being nonoperational when no vibration power generation is performed within the time slots prestored in the storage 16. In other words, the estimator 15 provides a notification of the motor 2 being nonoperational when no vibration power generation is performed by the vibration power generation element 12 in a time slot different from the time slots stored in the storage 16.

In the embodiment, the motor monitoring sensor 1 includes the battery 19. With power generated through the vibration power generation performed by the vibration-powered generator 11 sufficient to drive the motor monitoring sensor 1, the motor monitoring sensor 1 may eliminate the battery 19.

The embodiment and the modifications described above may each be combined together.

## Claims

1. A motor monitoring sensor (1), comprising:

   an acceleration sensor (17) attachable to a motor (2) to be monitored to detect vibration of the motor (2);
   a processor (15) configured to generate state information indicating a state of the motor (2) based on a detection value indicating the vibration of the motor (2) detected by the acceleration sensor (17);
   a transmitter (18) configured to transmit the generated state information to a host device;
   a vibration-powered generator (11) attachable to the motor (2) to generate power with the vibration of the motor (2) and supply the generated power to the acceleration sensor (17), the processor (15), and the transmitter (18); and
   a storage (16) configured to store a time slot in which the motor (2) is stopped,
   wherein
   the processor (15) adds, to the state information, information indicating that the motor (2) is stopped in response to the power supplied from the vibration-powered generator (11) being less than or equal to a predetermined threshold,
   wherein the processor (15) adds information indicating a failure of the motor (2) to the state information in response to the motor (2) detected as being stopped at a time different from the time slot.

2. The motor monitoring sensor (1) according to claim 1, wherein

   the vibration-powered generator (11) includes a vibration power generation element (12) configured to generate power with the vibration of the motor (2) and a power storage (13) configured to store the power generated by the vibration power generation element (12), and
   the vibration-powered generator (11) supplies the power stored in the power storage (13) to the processor (15) and the transmitter (18).

3. The motor monitoring sensor (1) according to claim 1 or 2, further comprising:

   a battery (19),
   wherein the motor monitoring sensor (1) supplies power from the battery (19) to the processor (15) and the transmitter (18) in response to the power generated by the vibration-powered generator (11) being insufficient to drive the processor (15) and the transmitter (18).

4. The motor monitoring sensor (1) according to any one of the preceding claims, wherein the processor (15) generates the state information based on time-series data about the detection value detected by the acceleration sensor (17).

5. The motor monitoring sensor (1) according to any one of the preceding claims, wherein the processor (15) determines a failure value indicating a degree of failure of the motor (2) based on the detection value and adds the failure value to the state information.

6. The motor monitoring sensor (1) according to claim 5, wherein the failure value includes three or more levels of index values each corresponding to the degree of failure of the motor (2).

7. The motor monitoring sensor (1) according to claim 5 or 6, wherein the failure value includes an index value indicating normality of the motor (2) or an index value indicating abnormality of the motor (2).


**Patentansprüche**

1. Motorüberwachungssensor (1), umfassend:

einen Beschleunigungssensor (17), der an einem Motor (2), der zu überwachen ist, anbringbar ist, um eine Schwingung des Motors (2) zu erfassen;
einen Prozessor (15), der ausgelegt ist, um Zustandsinformationen zu erzeugen, die einen Zustand des Motors (2) angeben, basierend auf einem Erfassungswert, der die Schwingung des Motors (2) angibt, die von dem Beschleunigungssensor (17) erfasst wird;
einen Sender (18), der ausgelegt ist, um die erzeugten Zustandsinformationen an eine Host-Vorrichtung zu senden;
einen schwingungsangetriebenen Generator (11), der an dem Motor (2) anbringbar ist, um mit der Schwingung des Motors (2) Energie zu erzeugen und die erzeugte Energie an den Beschleunigungssensor (17), den Prozessor (15) und den Sender (18) zu liefern; und
einen Speicher (16), der ausgelegt ist, um einen Zeitabschnitt zu speichern, in dem der Motor (2) angehalten ist, wobei
der Prozessor (15) den Zustandsinformationen Informationen hinzufügt, die angeben, dass der Motor (2) angehalten ist als Reaktion darauf, dass die Energie, die von dem schwingungsangetriebenen Generator (11) geliefert wird, kleiner oder gleich einem vorbestimmten Schwellenwert ist,
wobei der Prozessor (15) den Zustandsinformationen Informationen hinzugefügt, die einen Ausfall des Motors (2) angeben, als Reaktion darauf, dass erfasst wird, dass der Motor (2) zu einer Zeit angehalten ist, der sich von dem Zeitabschnitt unterscheidet.

2. Motorüberwachungssensor (1) nach Anspruch 1, wobei

der schwingungsangetriebene Generator (11) ein Schwingungsenergieerzeugungselement (12) aufweist, das ausgelegt ist, um mit der Schwingung des Motors (2) Energie zu erzeugen, sowie einen Energiespeicher (13), der ausgelegt ist, die Energie zu speichern, die von dem Schwingungsenergieerzeugungselement (12) erzeugt wird, und
der schwingungsangetriebene Generator (11) die Energie, die in dem Energiespeicher (13) gespeichert ist, an den Prozessor (15) und den Sender (18) liefert.

3. Motorüberwachungssensor (1) nach Anspruch 1 oder 2, ferner umfassend:

eine Batterie (19),
wobei der Motorüberwachungssensor (1) Energie von der Batterie (19) an den Prozessor (15) und den Sender (18) liefert als Reaktion darauf, dass die Energie, die von dem schwingungsangetriebenen Generator (11) erzeugt wird, nicht ausreicht, um den Prozessor (15) und den Sender (18) anzutreiben.

4. Motorüberwachungssensor (1) nach einem der vorhergehenden Ansprüche, wobei der Prozessor (15) die Zustandsinformationen basierend auf Zeitreihendaten über den Erfassungswert erzeugt, der von dem Beschleunigungssensor (17) erfasst wird.

5. Motorüberwachungssensor (1) nach einem der vorhergehenden Ansprüche, wobei
der Prozessor (15) basierend auf dem Erfassungswert einen Ausfallwert bestimmt, der einen Ausfallgrad des Motors (2) angibt, und den Ausfallwert den Zustandsinformationen hinzufügt.

6. Motorüberwachungssensor (1) nach Anspruch 5, wobei
der Ausfallwert drei oder mehr Stufen von Indexwerten aufweist, die jeweils dem Ausfallgrad des Motors (2) entsprechen.

7. Motorüberwachungssensor (1) nach Anspruch 5 oder 6, wobei
der Ausfallwert einen Indexwert aufweist, der eine Normalität des Motors (2) angibt, oder einen Indexwert, der eine Anormalität des Motors (2) angibt.

**Revendications**

1. Capteur de surveillance de moteur (1), comprenant :

   un capteur d'accélération (17) apte à être rapporté sur un moteur (2) à surveiller pour détecter une vibration du moteur (2) ;
   un processeur (15) configuré pour générer des informations d'état indiquant un état du moteur (2) sur la base d'une valeur de détection indiquant la vibration du moteur (2) détectée par le capteur d'accélération (17) ;
   un émetteur (18) configuré pour transmettre les informations d'état générées à un dispositif hôte ;
   un générateur entrainé par vibrations (11) apte à être rapporté sur le moteur (2) pour générer de l'énergie à partir de la vibration du moteur (2) et fournir l'énergie générée au capteur d'accélération (17), au processeur (15) et à l'émetteur (18) ; et
   une mémoire (16) configurée pour stocker un intervalle de temps pendant lequel le moteur (2) est à l'arrêt, dans lequel
   le processeur (15) ajoute, aux informations d'état, des informations indiquant que le moteur (2) est à l'arrêt en réponse au fait que l'énergie fournie par le générateur entrainé par vibrations (11) est inférieure ou égale à un seuil prédéterminé,
   dans lequel le processeur (15) ajoute aux informations d'état des informations indiquant une défaillance du moteur (2) en réponse au fait que le moteur (2) est détecté comme étant à l'arrêt à un moment différent de l'intervalle de temps.

2. Capteur de surveillance de moteur (1) selon la revendication 1, dans lequel

   le générateur entrainé par vibrations (11) comporte un élément de génération d'énergie par vibrations (12) configuré pour générer de l'énergie à partir de la vibration du moteur (2) et un dispositif de stockage d'énergie (13) configuré pour stocker l'énergie générée par l'élément de génération d'énergie par vibrations (12), et
   le générateur entrainé par vibrations (11) fournit l'énergie stockée dans le dispositif de stockage d'énergie (13) au processeur (15) et à l'émetteur (18).

3. Capteur de surveillance de moteur (1) selon la revendication 1 ou 2, comprenant en outre :

   une batterie (19),
   dans lequel le capteur de surveillance de moteur (1) fournit de l'énergie provenant de la batterie (19) au processeur (15) et à l'émetteur (18) en réponse au fait que l'énergie générée par le générateur entrainé par vibration (11) est insuffisante pour entrainer le processeur (15) et l'émetteur (18).

4. Capteur de surveillance de moteur (1) selon l'une quelconque des revendications précédentes, dans lequel
le processeur (15) génère les informations d'état sur la base de données chronologiques concernant la valeur de détection détectée par le capteur d'accélération (17).

5. Capteur de surveillance de moteur (1) selon l'une quelconque des revendications précédentes, dans lequel
le processeur (15) détermine une valeur de défaillance indiquant un degré de défaillance du moteur (2) sur la base de la valeur de détection et ajoute la valeur de défaillance aux informations d'état.

6. Capteur de surveillance de moteur (1) selon la revendication 5, dans lequel
la valeur de défaillance comporte trois niveaux ou plus de valeurs d'indice correspondant chacun au degré de défaillance du moteur (2).

7. Capteur de surveillance de moteur (1) selon la revendication 5 ou 6, dans lequel
la valeur de défaillance comporte une valeur d'indice indiquant une normalité du moteur (2) ou une valeur d'indice indiquant une anomalie du moteur (2).

# FIG. 1

FIG. 2

# FIG. 3

# FIG. 4

```
                    ┌─────────────┐
                    │    Start    │
                    └──────┬──────┘
                           │
                    ┌──────▼──────┐
                    │             │
                    └──────┬──────┘
                           │
                         S1
              ┌────────────────────────┐
        Yes   │ Vibration power generation │   No
      ┌───────┤      performed?        ├───────┐
      │       └────────────────────────┘       │
      │                                         │
     S2                                        S8
  ┌────────────────┐              ┌──────────────────────┐
  │ Operation flag on? │ Yes      │ Nonoperational flag on? │ Yes
  └────────┬───────┘              └──────────┬───────────┘
           │ No                              │ No
          S3                                S9
  ┌────────────────┐              ┌──────────────────┐
  │   Operation    │              │   Nonoperation   │
  │  notification  │              │   notification   │
  └────────┬───────┘              └────────┬─────────┘
           │                               │
          S4                              S10
  ┌────────────────┐              ┌──────────────────┐
  │    Set flag    │              │     Set flag     │
  └────────┬───────┘              └────────┬─────────┘
           │                               │
        ┌──▼──┐                         ┌──▼──┐
        │  A  │                         │  B  │
        └─────┘                         └─────┘
```

# FIG. 5

**EP 4 339 565 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010076714 A1
- US 2012041695 A1
- US 2021123835 A1

**Non-patent literature cited in the description**

- WISE-2410 LoRaWAN Wireless Condition Monitoring Sensor [Online. Advantec Co., Ltd., 07 August 2022
- iQ Monozukuri Rotating Machine Vibration Diagnosis Introduction of Operation Check Equipment [Online. Mitsubishi Electric Corporation, February 2019